# EUROPÄISCHE PATENTANMELDUNG

(11) **EP 0 826 712 A2**
(43) Veröffentlichungstag der Anmeldung: **04.03.1998**
(21) Anmeldenummer: 97114893.7
(22) Anmeldetag: 28.08.1997
(51) Int. Cl.: C08G 63/692

(54) **Flammwidrige, ungesättigte Polyesterharze**

(30) Priorität: 02.09.1996 DE 19635489
(71) Anmelder: Clariant GmbH, 65926 Frankfurt am Main (DE)
(72) Erfinder: Hörold, Sebastian, Dr., 50374 Erftstadt (DE); Schmitz, Hans-Peter, 50321 Brühl (DE)

(57) **Zusammenfassung**

Die Erfindung betrifft flammwidrige, ungesättigte Polyesterharze aus ungesättigten und gesättigten Dicarbonsäuren und/oder deren Anhydriden, mehrwertigen Alkoholen, einem oder mehreren Monomeren und einer reaktiven Phosphorverbindung, welche dadurch gekennzeichnet ist, daß sie Struktureinheiten der Formel IV 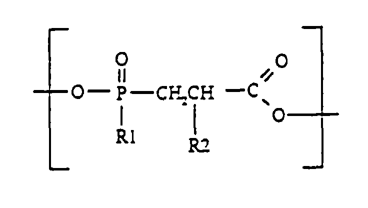 in der R1 geradlinige oder verzweigte Alkyl-, Cycloalkyl-, Aryl- oder Alkylarylgruppen mit 1-18 C-Atomen, R2 Methyl oder H bedeutet, enthalten. Die Erfindung betrifft ebenfalls ein Verfahren zur Herstellung solcher Polyesterharze sowie ihre Verwendung.

## Beschreibung

Die Erfindung betrifft flammwidrige, ungesättigte Polyesterharze aus ungesättigten und gesättigten Dicarbonsäuren und/oder deren Anhydriden mehrwertigen Alkoholen einem oder mehreren Monomeren und einer reaktiven Phosphorverbindung, ein Verfahren zu ihrer Herstellung und ihre Verwendung.

Ungesättigte Polyesterharze sind Polykondensationsprodukte aus gesättigten und ungesättigten Dicarbonsäuren oder deren Anhydriden mit Diolen. Sie werden gehärtet durch radikalische Polymerisation mit Initiatoren (z.B. Peroxiden) und Beschleunigern. Die Doppelbindungen der Polyesterkette reagieren mit der Doppelbindung des copolymerisierbaren Lösungsmittelmonomers. Die wichtigsten Dicarbonsäuren sind Maleinsäureanhydrid, Fumarsäure und Terephtalsäure. Das am häufigsten verwendete Diol ist 1,2-Propandiol, vielfach werden auch Ethylenglycol, Diethylenglycol und Neopentylglycol u.a. verwendet.

Das geeignetste Monomer zur Vernetzung ist Styrol. Styrol ist beliebig mit den Polyesterharzen mischbar und läßt sich gut copolymerisieren. Der Styrolgehalt in ungesättigten Polyesterharzen liegt normalerweise zwischen 25 und 40%. In rieselfähigen ungesättigten Polyesterharzen wird meist Diallylphthalat als Monomeres verwendet.

Ungesättigte Polyesterharze werden vielfach zu Formteilen verarbeitet. Formteile aus Glasfaser-verstärkten ungesättigten Polyesterharzen zeichnen sich durch ihre guten mechanischen Eigenschaften ihre geringe Dichte, Chemikalienresistenz und ihre ausgezeichnete Oberflächenqualität aus. Dies und ihr günstiger Preis haben dazu geführt, daß sie in den Anwendungsbereichen Schienenfahrzeuge, Bauwesen und Luftfahrt zunehmend metallische Werkstoffe ersetzen. Abhängig vom Anwendungsgebiet werden unterschiedliche Anforderungen hinsichtlich mechanischer, elektrischer und brandschutztechnischer Eigenschaften gestellt. Insbesondere im Bereich Schienenfahrzeuge wurden die Brandschutzanforderungen in letzer Zeit verschärft.

Es ist bekannt, ungesättigte Polyesterharze dadurch flammwidrig einzustellen, daß brom- oder chlorhaltige Säure- bzw. Alkoholkomponenten verwendet werden. Beispiele sind Hexachloroendomethylentetrahydrophthalsäure (HET-Säure), Tetrabromphthalsäure oder Dibromneopentylglycol. Als Synergist wird häufig Antimontrioxid verwendet. Nachteilig an brom- oder chlorhaltigen Polyesterharzen ist, daß im Brandfall korrosive und ggf. umweltrelevante Gase entstehen, was zu erheblichen Schäden an elektronischen Bauteilen, etwa an Relais in Schienenfahrzeugen, führen kann. Unter ungünstigen Bedingungen können auch polychlorierte bzw. bromierte Dibenzodioxine und Furane entstehen.

Es ist darüber hinaus bekannt, ungesättigte Polyesterharze, auch als Formmassen, mit Füllstoffen wie Aluminiumhydroxid, die eine Löschwirkung aufweisen, auszurüsten. Bei Füllgraden von 150-200 Teilen Aluminiumhydroxid pro 100 Teile ungesättigtes Polyesterharz kann ein Selbstverlöschen und eine geringe Rauchgasdichte erreicht werden. Mit derartigen Rezepturen kann allerdings nicht nach Injektionsverfahren gearbeitet werden, da durch die verwendeten Verstärkungsmaterialien keine homogene Verteilung des Aluminiumhydroxids erreicht werden kann. Für Injektionsverfahren werden deshalb chlorierte oder bromierte ungesättigte Polyesterharze verwendet.

Der Einsatz von Phosphorverbindungen in ungesättigte Polyesterharze zur Einstellung einer ausreichenden Flammwidrigkeit ist bereits verschiedentlich vorgeschlagen worden. So beschreibt die US-A-3,433,854 die Verwendung von Phosphorsäureestern in halogenhaltigen ungesättigten Polyesterharzen. Auch Melamindiphosphat ist als Flammschutzmittel für ungesättigte Polyesterharze bereits getestet worden (P. Penczek et al., Kunststoffe 77 (1987) 4, S. 415-417).

Nachteilig bei den bisher bekannten Systemen ist jedoch, daß teilweise hohe Mengen an Flammschutzmittel eingetragen werden müssen, wobei erhebliche Veränderungen in den mechanischen und elektrischen Eigenschaften der Polyesterharze hingenommen werden müssen.

Es ist daher Aufgabe der vorliegenden Erfindung, flammwidrige ungesättigte Polyesterharze zur Verfügung zu stellen, die die vorgenannten Nachteile nicht aufweisen und die halogenfrei sind.

Die vorliegende Aufagbe wird gelöst durch flammwidrige ungesättigte Polyesterharze der eingangs beschriebenen Art, dadurch gekennzeichnet, daß sie Struktureinheiten der Formel IV 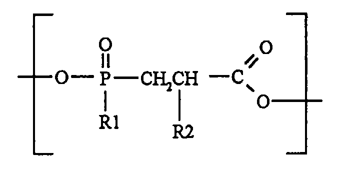 in der R1 geradlinige oder verzweigte Alkyl-, Cycloalkyl-, Aryl- oder Alkylarylgruppen mit 1 bis 18 C-Atomen, R2 Methyl oder H bedeutet, enthalten.

Bevorzugt entspricht die Phosphorverbindung einem carboxylgrupperhaltigem Phosphinsäureanhydrid der allgemeinen Formel I, einer carboxylgruppenhaltigen Phosphinsäure der allgemeinen Formel II oder einer Phosphinsäure mit veresterter Carboxylgruppe der allgemeinen Formel III 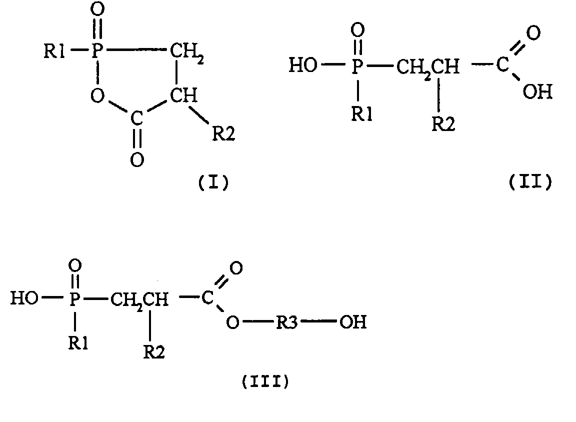 worin R1 geradkettige oder verzweigte Alkyl-, Cycloalkyl-, Aryl oder Alkylarylgruppen mit 1 bis 18 C-Atomen, R2 Methyl oder H und R3 geradkettige oder verzweigte Alkylen-, Cycloalkylen-, Arylen- oder Alkylarylengruppen mit 1 bis 18 C-Atomen bedeuten.

Bevorzugt bedeuten R1 und R3 geradkettige oder verzweigte Alkyl-, Cycloalkyl- oder Arylgruppen mit 1 bis 6 C-Atomen.

Bevorzugt wird als reaktive Phosphorverbindung 2-Methyl-2,5-dioxo-1-oxa-2-phospholan oder dessen Glycolester eingesetzt.

Bevorzugt wird als ungesättigte Dicarbonsäure und/oder Dicarbonsäureanhydrid Maleinsäure, Fumarsäure, Itaconsäure, Mesaconsäure oder Citraconsäure eingesetzt..

Besonders bevorzugt wird als ungesättigtes Dicarbonsäureanhydrid Maleinsäureanhydrid eingesetzt.

Als weitere Dicarbonsäuren oder Dicarbonsäureanhydride können Phthalsäure, Isophthalsäure, Terephthalsäure, Adipinsäure, Azelainsäure oder Sebacinsäure einesetzt werden.

Bevorzugt wird als mehrwertiger Alkohol 1,2-Propandiol, 1,2-Butanol oder Ethylenglycol, Neopentylglykol, Diethylenglykol, Dipropylenglykol, ethoxyliertes oder propoxyliertes Bisphenol A und/oder Tricyclodecandimethanol eingesetzt.

Besonders bevorzugt wird als mehrwertiger Alkohol 1,2-Propandiol oder Ethylenglycol eingesetzt.

Bevorzugt wird als Monomer ein ungesättigter Kohlenwasserstoff eingesetzt.

Bevorzugt wird als ungesättigter Kohlenwasserstoff Styrol, Methylstyrol, Methylmethacrylat, Diallylphthalat und/oder Triallylcyanurat eingesetzt.

Der Phosphorgehalt im flammwidrigen, ungesättigten Polyesterharz beträgt bevorzugt zwischen 1 und 10 Gew.-%.

Bevorzugt enthalten die erfindungsgemäßen flammwidrigen, ungesättigten Polyesterharze mindestens 10 Gew.-% einer α,β-ungesättigten Dicarbonsäure oder ihrer Anhydride.

Besonders bevorzugt enthalten sie mindestens 20 Gew.-% einer α,β-ungesättigten Dicarbonsäure oder ihrer Anhydride.

Die vorliegende Aufgabe wird ebenfalls gelöst durch ein Verfahren zur Herstellung von flammwidrigen, ungesättigten Polyesterharzen aus ungesättigten und gesättigten Dicarbonsäuren und/oder deren Anhydriden, mehrwertigen Alkoholen, einem oder mehreren Monomeren und einer reaktiven Phosphorverbindung, dadurch gekennzeichnet, daß man eine Phosphorverbindung der allgemeinen Formel I, II oder III mit ungesättigten Dicarbonsäuren oder deren Anhydriden, gesättigten Dicarbonsäuren oder deren Anhydriden und mehrwertigen Alkoholen umsetzt und anschließend mit dem oder den Monomeren vermischt.

Bevorzugt setzt man bei Temperaturen von 100 bis 250 °C um.

Bevorzugt setzt man in einem Lösemittel um.

Bevorzugt werden als Lösemittel aliphatische, cycloaliphatische oder aromatische Kohlenwasserstoffe eingesetzt.

Bevorzugt werden als Lösemittel Xylol oder Toluol eingesetzt.

Bevorzugt werden beim erfindungsgemäßen Verfahren 100 Gewichtsteile ungesättigtes Polyesterharz mit 0,1 bis 100 Gewichtsteilen Monomer oder Monomeren vermischt.

Die Erfindung betrifft ebenfalls die Verwendung der erfindungsgemäßen flammwidrigen, ungesättigten Polyesterharze oder erhalten nach dem erfindungsgemäßen Verfahren zur Herstellung von Laminaten, Formkörpern oder Beschichtungen.

Die Erfindung betrifft auch Laminate, Formkörper oder Beschichtungen, hergestellt unter Verwendung der erfindungsgemäßen flammwidrigen, ungesättigten Polyesterharze oder erhalten nach dem erfindungsgemäßen Verfahren.

Die erfindungsgemäßen herstellbaren Polyesterharz-Formmassen können durch Glasgewebe oder Glasfasern verstärkt sein. Sie können auch mit Füllstoffen wie Aluminiumhydroxid oder Quarzmehl ausgerüstet werden.

Die bereits zuvor beschriebene erfindungsgemäße Herstellung der flammwidrigen, ungesättigten Polyesterharze erfolgt, indem man eine Phosphorverbindung der allgemeinen Formel I oder II, oder ein Umsetzungsprodukt von Phosphorverbindungen der allgemeinen Formeln I oder II mit zweiwertigen Alkoholen zu Estern der allgemeinen Formel III 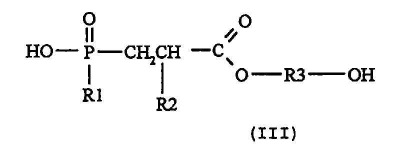 worin R1, R2 und R3 zu vorgenannte Bedeutung haben, mit einer oder mehrerer ungesättigter Dicarbonsäuren oder deren Anhydriden und einem oder mehreren Diolen zu einem ungesättigten Polyester kondensiert.

Gegebenenfalls können auch gesättigte Dicarbonsäuren oder Dicarbonsäureanhydride mit einkondensiert werden. Das Harz wird anschließend mit einem Monomeren vermischt.

Die der Erfindung zugrundeliegenden Phosphorverbindungen nach Formel I und II können beispielsweise durch Addition geeigneter Phosphorverbindungen an Acrylsäure oder Acrylsäureester hergestellt werden.

Bei den Monomeren ist zur Herstellung flüssiger, flammwidriger ungesättigter Polyesterharze Styrol besonders bevorzugt; zur Herstellung rieselfähiger, flammwidriger ungesättigter Polyesterharze ist Diallylphthalat besonders bevorzugt.

Die Prüfung des Brandverhaltens erfolgte nach der Vorschrift von Underwriters Laboratories 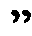 Test for Flammability of Plastics Materials - UL 94" in der Fassung vom 02.05.1975 an Prüfkörpern von 127 mm Länge, 12,7 mm Breite und verschiedener Dicke durchgeführt.

Nachfolgend wird die Erfindung durch Beispiele erläutert.

In den Beispielen wurden folgende Verbindungen eingesetzt:
2-Methyl-2,5-dioxo-1-oxa-2-phospholan (Hoechst AG, Frankfurt/Main)
   Phosphorhaltiges Säureanhydrid mit einem Phosphorgehalt von 23%, Zwischenprodukt für phosphororganische Synthesen.
Kobaltbeschleuniger NL 49P (Akzo Chemie GmbH, Düren)
   Kobaltoktoatlösung in Dibutylphtalat mit einem Kobaltgehalt von 1 Masse-%.
Butanox M 50 (Akzo Chemie GmbH, Düren)
   Methylethylketonperoxid, mit Dimethylphtalat phlegmatisiert, klare Flüssigkeit mit einem Aktiv-Sauerstoffgehalt von mind. 9 Masse-%.

### Herstellung der phosphormodifizierten, ungesättigten Polyesterharze

### Beispiel 1:

In einem 500 ml Fünfhalskolben mit Rührer, Wasserabscheider, Thermometer und Stickstoff-Zuleitung werden 107 g Maleinsäureanhydrid, 147 g 2-Methyl-2,5-dioxo-1-oxa-2-phospholan, 184 g 1,2 Propandiol, 100 g Xylol und 0,1 g Hydrochinon unter Rühren und Einleitung von Stickstoff auf 100 °C erhitzt. Durch exotherme Reaktion steigt die Temperatur auf etwa 150 °C. Nach Abklingen der exothermen Reaktion wird noch 5 h bei 180 °C gerührt. Es werden insgesamt 43 ml Wasser und 394 g Polyester erhalten.
Der Phosphorgehalt des Polyesters beträgt 8,6 Gew.-%, die Säurezahl 35 mg KOH/g.
Die heiße Schmelze des Polyesters wird mit 212 g Styrol zu einer 35 gewichtprozentigen Lösung des Polyesters in Styrol verdünnt.

### Beispiel 2

In einem 500 ml Fünfhalskolben mit Rührer, Wasserabscheider, Thermometer und Stickstoff-Zuleitung werden 107 g Maleinsäureanhydrid, 81 g Phtalsäureanhydrid, 74 g 2-Methyl-2,5-dioxo-1-oxa-2-phospholan, 184 g 1,2 Propandiol, 100 g Xylol und 0,1 g Hydrochinon unter Rühren und Einleitung von Stickstoff auf 100 °C erhitzt. Durch exotherme Reaktion steigt die Temperatur auf etwa 160 °C. Nach Abklingen der exothermen Reaktion wird noch 5 h bei 180 °C gerührt. Es werden insgesamt 44 ml Wasser und 402 g Polyester erhalten.
Der Phosphorgehalt des Polyesters beträgt 4,2 Gew.-%, die Säurezahl 27 mg KOH/g.
Die heiße Schmelze des Polyesters wird mit 217 g Styrol zu einer 35 gewichtsprozentigen Lösung des Polyesters in Styrol verdünnt.

### Brandtest

### Beipiel 3

100 g phosphormodifiziertes, ungesättigtes Polyesterharz nach Beispiel 1 wird mit 0,5 g Kobaltbeschleuniger NL 49 P und 2 g Butanox M 50 vermischt.
In einer beheizten Presse werden auf einer ®Hostaphan Trennfolie und einem Stahlrahmen eine Lage Textilglas-Endlosmatte vom Flächengewicht 450 g/m² eingelegt. Anschließend wird das ungesättigte Polyesterharz gleichmäßg verteilt, das Laminat mit einer Trennfolie abgedeckt und bei einer Temperatur von 50 °C während einer Stunde bei einem Preßdruck von 10 bar eine Preßplatte von 2 mm Dicke hergestellt.
Der Probenkörper erreicht im UL-94 Vertikaltest eine V-0 Einstufung (Nachbrennzeit < 1s).

## Patentansprüche

1. Flammwidrige, ungesättigte Polyesterharze aus ungesättigten und gesättigten Dicarbonsäuren und/oder deren Anhydriden, mehrwertigen Alkoholen, einem oder mehreren Monomeren und einer reaktiven Phosphorverbindung, dadurch gekennzeichnet, daß sie Struktureinheiten der Formel IV 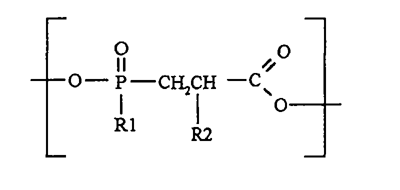 in der R1 geradlinige oder verzweigte Alkyl-, Cycloalkyl-, Aryl- oder Alkylarylgruppen mit 1-18 C-Atomen, R2 Methyl oder H bedeutet, enthalten.

2. Flammwidrige, ungesättigte Polyesterharze nach Anspruch 1, dadurch gekennzeichnet, daß die reaktive Phosphorverbindung einem carboxylgruppenhaltigem Phosphinsäureanhydrid der allgemeinen Formel I, einer carboxylgruppenhaltigen Phosphinsäure der allgemeinen Formel II oder einer Phosphinsäure mit veresterter Carboxylgruppe der allgemeinen Formel III entspricht, 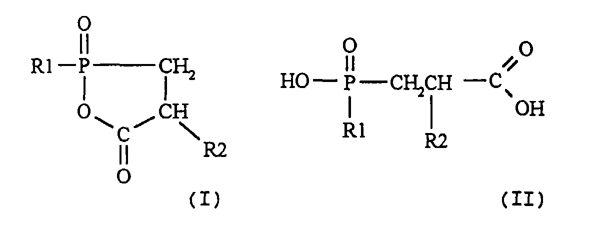 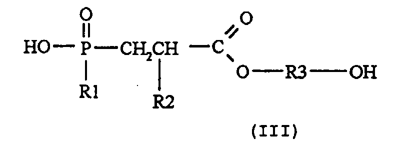 worin R1 geradkettige oder verzweigte Alkyl-, Cycloalkyl-, Aryl- oder Alkylarylgruppen mit 1 bis 18 C-Atomen, R2 Methyl oder H und R3 geradkettige oder verzweigte Alkylen-, Cycloalkylen-, Arylen- oder Alkylarylengruppen mit 1 bis 18 C-Atomen bedeuten.

3. Flammwidriges ungesättigte Polyesterharze nach Anspruch 2, dadurch gekennzeichnet, daß R1 und R3 geradkettige oder verzweigte Alkyl-, Cycloalkyl- oder Arylgruppen mit 1 bis 6 C-Atomen bedeuten.

4. Flammwidrige, ungesättigte Polyesterharze nach einem oder mehreren der Ansprüche 1 bis 3, dadurch gekennzeichnet, daß als reaktiven Phosphorverbindung 2-Methyl-2,5-dioxo-1-oxa-2-phospholan oder dessen Glycolester eingesetzt wird.

5. Flammwidrige, ungesättigte Polyesterharze nach einem oder mehreren der Ansprüche 1 bis 4, dadurch gekennzeichnet, daß als ungesättigte Dicarbonsäure und/oder Dicarbonsäureanhydrid Maleinsäure, Fumarsäure, Adipinsäure, Phthalsäure, Isophthalsäure, Terephthalsäure und/oder Tetrahydrophthalsäure eingesetzt werden.

6. Flammwidrige, ungesättigte Polyesterharze nach einem oder mehreren der Ansprüche 1 bis 5, dadurch gekennzeichnet, daß als ungesättigtes Dicarbonsäureanhydrid Maleinsäureanhydrid eingesetzt wird.

7. Flammwidrige, ungesättigte Polyesterharze nach einem oder mehreren der Ansprüche 1 bis 6, dadurch gekennzeichnet, daß als mehrwertiger Alkohol 1,2-Propandiol, 1,2-Butanol, oder Ethylenglycol, Neopentylglykol, Diethylenglykol, Dipropylenglykol, ethyxyliertes oder propoxyliertes Bisphenol A und/oder Tricyclodecandimethanol eingesetzt wird.

8. Flammwidrige, ungesättigte Polyesterharze nach einem oder mehreren der Ansprüche 1 bis 7, dadurch gekennzeichnet, daß als mehrwertiger Alkohol 1,2-Propandiol, oder Ethylenglycol eingesetzt wird.

9. Flammwidrige, ungesättigte Polyesterharze nach einem oder mehreren der Ansprüche 1 bis 8, dadurch gekennzeichnet, daß als Monomer ein ungesättigter Kohlenwasserstoff eingesetzt wird.

10. Flammwidrige, ungesättigte Polyesterharze nach Anspruch 9, dadurch gekennzeichnet, daß als ungesättigter Kohlenwasserstoff Styrol, Methylstyrol, Methylmethacrylat, Diallylphtalat und/oder Triallylcyanurat eingesetzt wird.

11. Flammwidrige, ungesättigte Polyesterharze nach einem oder mehreren der Ansprüche 1 bis 10, dadurch gekennzeichnet, daß der Phosphorgehalt im flammwidrigen, ungesättigten Polyesterharz zwischen 1 und 10 Gew.-% beträgt.

12. Flammwidrige, ungesättigte Polyesterharze nach einem oder mehreren der Ansprüche 1 bis 11, dadurch gekennzeichnet, daß sie mindestens 10 Gew.-% einer α,β-ungesättigten Dicarbonsäure oder ihrer Anhydride enthalten.

13. Flammwidrige, ungesättigte Polyesterharze nach einem oder mehreren der Ansprüche 1 bis 12, dadurch gekennzeichnet, daß mindestens 20 Gew.-% einer α,β-ungesättigten Dicarbonsäure oder ihrer Anhydride enthalten.

14. Verfahren zur Herstellung von flammwidrigen, ungesättigten Polyesterharzen aus ungesättigten und gesättigten Dicarbonsäuren und/oder deren Anhydriden, mehrwertigen Alkoholen, einem oder mehreren Monomeren und einer reaktiven Phosphorverbindung, dadurch gekennzeichnet, daß man eine Phosphorverbindung der allgemeinen Formel I, II oder III mit ungesättigten Dicarbonsäuren oder deren Anhydriden, gesättigten Dicarbonsäuren oder deren Anhydriden und mehrwertigen Alkoholen umsetzt und anschließend mit dem oder den Monomeren vermischt.

15. Verfahren nach Anspruch 14, dadurch gekennzeichnet, daß man bei Temperaturen von 100-250 °C umsetzt.

16. Verfahren nach Anspruch 14 oder 15, dadurch gekennzeichnet, daß man in einem Lösemittel umsetzt.

17. Verfahren nach Anspruch 16, dadurch gekennzeichnet, daß als Lösemittel aliphatische, cycloaliphatische oder aromatische Kohlenwasserstoffe eingesetzt werden.

18. Verfahren nach Anspruch 17, dadurch gekennzeichnet, daß als Lösemittel Xylol oder Toluol eingesetzt werden.

19. Verfahren nach einem oder mehreren der Ansprüche 14 bis 18, dadurch gekennzeichnet, daß man 100 Gewichtsteile ungesättigtes Polyesterharz mit 0,1 bis 100 Gewichtsteilen Monomer oder Monomeren vermischt.

20. Verwendung der flammwidrigen, ungesättigten Polyesterharze nach einem oder mehreren der Ansprüche 1 bis 13 oder erhalten nach einem oder mehreren der Ansprüche 14 bis 19 zur Herstellung von Laminaten, Formkörpern oder Beschichtungen.

21. Laminate, Formkörper oder Beschichtungen, hergestellt unter Verwendung der flammwidrigen, ungesättigten Polyesterharze nach einem oder mehreren der Ansprüche 1 bis 13 oder erhalten nach einem oder mehreren der Ansprüche 14-19.
